# EUROPÄISCHE PATENTSCHRIFT

(11) **EP 2 308 640 B1**
(45) Veröffentlichungstag und Bekanntmachung des Hinweises auf die Patenterteilung: **09.05.2012**
(21) Anmeldenummer: 10004468.4
(22) Anmeldetag: 11.07.2006
(51) Int. Cl.: B23Q 17/00

(54) **Abfragesystem für eine bewegte Maschinenkomponente**
Inquiry system for a mobile machine component
Système de questionnement pour des composants de machines mobiles

(30) Priorität: 27.07.2005 DE 102005035042
(43) Veröffentlichungstag der Anmeldung: 13.04.2011
(62) Teilanmeldung aus: 06776183.3
(73) Patentinhaber: Schunk GmbH & Co. KG Spann- und Greiftechnik, 74348 Lauffen am Neckar (DE)
(72) Erfinder: Schuster, Andreas, 71543 Wüstenrot/Neulautern (DE); Fellhauer, Bruno, 74336 Brackenheim (DE)
(74) Vertreter: Bulling, Alexander

(56) Entgegenhaltungen:
- EP-A1- 1 025 952
- DE-A1- 3 732 595
- DE-A1- 10 307 565
- DE-C1- 4 229 569
- US-A- 4 090 802
- US-A1- 2002 002 885

## Beschreibung

Die Erfindung betrifft eine um eine Rotationsachse drehbar anordenbare Maschinenkomponente in Form eines Kraftspannfutters mit einem Spannbacken führenden Futterkörper, umfassend ein Abfragesystem, umfassend eine Abfragebaugruppe zur maschinenkomponentenseitigen Anordnung mit wenigstens einem bei einem bestimmten Zustand der Maschinenkomponente oder bei einer bestimmten Position eines Maschinenkomponententeils versorgungsenergiefrei-arbeitenden Schalter, mit einer die Schaltzustände des Schalters auswertenden und die ausgewerteten Schaltsignale mit digitalen Funkschaltsignalen versendenden Funksendeeinheit, und mit einer elektrischen Energiequelle zur Versorgung der Funksendeeinheit und umfassend eine gegenüber der Abfragebaugruppe stationär anordenbare Funkempfangseinheit zum Empfangen und zum Auswerten, Weiterleiten und/oder Anzeigen der von der Funksendeeinheit empfangenen Signale, wobei die Abfragebaugruppe im Futterkörper angeordnet ist.

Ein derartiges Abfragesystem ist beispielsweise aus der DE 103 07 565 A1 vorbekannt. Bei diesem Stand der Technik werden in einem rotierenden Kraftspannfutter druckbeaufschlagte Druckräume mittels Drucksensoren überwacht. Die Drucksensoren werden dabei von mitrotierenden Akkumulatoren mit elektrischer Energie versorgt. Den Drucksensoren ist dabei ein stationärer, nicht rotierender Empfänger zugeordnet, der an eine Einheit zur Auswertung der vom Drucksensor empfangenen Signale angeschlossen ist.

Bei einem derart vorbekannten Stand der Technik wird der Druck vom elektrische Energie benötigten Drucksensor gemessen und die vom Drucksensor generierten Signale werden mittels Funk an den Empfänger übersandt. Zum einen wird folglich elektrische Energie zum Betreiben des Sensors bei der Druckmessung und zum anderen für das Versenden der Funkwellen benötigt. Augrund der nur beschränkt vorhandenen elektrischen Energie der Akkumulatoren ist die Betriebsdauer vergleichsweise kurz.

Darüber hinaus ist aus der US 4,090,802 ein Bohrfutter mit einem von mit rotierenden Batterien versorgten Transmitter bekannt. Im Überlastfall einer Kupplung wird durch einen Magnetschalter der Schaltzustand der Kupplung detektiert und vom Transmitter weitergeleitet.

Der vorliegenden Erfindung liegt die Aufgabe zugrunde, eine um eine Rotationsachse drehbar angeordnete Maschinenkomponente in Form eines Kraftspannfutters mit einem Spannbacken führenden Futterkörper, umfassend ein Abfragesystem, das mit vergleichsweise wenig elektrischer Energie auskommt und aufgrund des geringen Energieverbrauchs vergleichsweise lange Wartungsintervalle aufweist, bereitzustellen.

Diese Aufgabe wird gelöst durch eine um eine Rotationsachse drehbar anordenbare Maschinenkomponente in Form eines Kraftspannfutters mit den Merkmalen des Anspruchs 1. Ein derartiges Kraftspannfutter hat den Vorteil, dass mittels des Abfragesystems beispielsweise der Spanndruck, mit dem die Spannbacken ein Werkstück beaufschlagen und/oder die Position der Spannbacken abgefragt und mit vergleichsweise wenig elektrischer Energie an die Funkempfangseinheit übersendet werden kann. Dies hat weiterhin den Vorteil, dass ein versorgungsenergiefrei-arbeitender Schalter Verwendung findet, der selbst keine elektrische Energie verbraucht. Der Schalter wird bei einem bestimmten Zustand der bewegbaren Maschinenkomponente oder bei einer bestimmten Position eines Maschinenkomponententeils betätigt. Beim erfindungsgemäßen Abfragesystem wird lediglich elektrische Energie zur Auswertung der Schaltsignale, zum Umwandeln der Schaltsignale in digitale Funkschaltsignale und zum Aussenden der digitalen Funkschaltsignale verwendet. Die Energiequelle der maschinenkomponentenseitigen Abfragebaugruppe versorgt folglich lediglich die Funksendeinheit mit elektrischer Energie. Dadurch, dass keine analogen Signale der Schaltzustände, sondern bereits ausgewertete, digitalisierte Funkschaltsignale versendet werden, wird zudem der Energieverbrauch der Funksendeeinheit reduziert. Das Versenden der digitalen Funkschaltsignale kann, im Vergleich zum Versenden von analogen Signalen, vergleichsweise schnell, und deshalb energiesparend erfolgen, nämlich im Bereich unterhalb einer Millisekunde.

Eine derart ausgebildete Antenne hat sich in der Praxis als sehr vorteilhaft erwiesen, da aufgrund der schraubenfederartig ausgebildeten Antenne und des Überragens der Antenne über die senkrecht zur Rotationsachse verlaufenden Oberfläche des Futterkörpers optimal Funksignale mit geringer Sendeleistung funktionssicher versandt werden können.

Dadurch, dass die Funksendeeinheit samt Antenne und Energiequelle vollständig innerhalb eines Kunststoffvergusses angeordnet ist wird erreicht, dass die Funksendeeinheit gegen äußere Einflüsse, wie Bearbeitungsemulsionen und/oder Späne, geschützt ist.

Vorteilhafterweise zeichnet sich das Kraftspannfutter dadurch aus, dass die Antenne entlang einer gebogenen Linie verläuft.

Weiterhin ist vorteilhaft, wenn der versorgungsenergiefrei-arbeitende Schalter ein Druckschalter zur Kontrolle des Spanndruckzustandes des Spanndruckmittels und/oder der Spannposition der Spannbacken ist. Ein derartiger Druckschalter wird beispielsweise durch den vorherrschenden Spanndruck betätigt und kann beispielsweise je nach vorzusehendem Spanndruck eingestellt werden.

Weitere Einzelheiten und Vorteile der Erfindung sind der folgenden Beschreibung zu entnehmen, in der die in der Figur dargestellten Vorrichtungen näher beschrieben und erläutert sind.

Es zeigen:
- Figur 1: verschiedene Automationskomponenten;
- Figur 2: eine Funksendeeinheit samt zwei Schalter einer Automationskomponente gemäß Figur 1;
- Figur 3: eine Funksendeeinheit für ein Kraftspannfutter;
- Figur 4: ein Kraftspannfutter samt einer Funksendeeinheit gemäß Figur 3; und
- Figur 5: eine Funkempfangseinheit für eine Funksendeeinheit gemäß Figur 2 oder Figur 3.

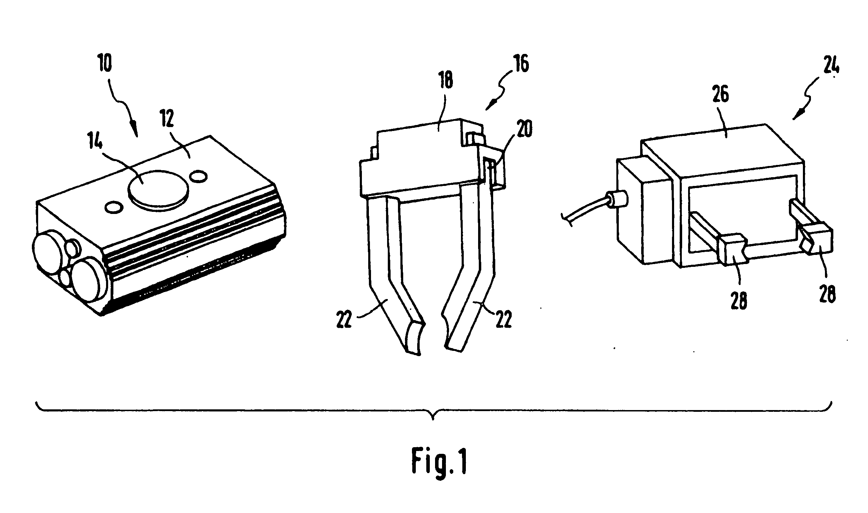

In der Figur 1 sind verschiedene Automationskomponenten dargestellt. Zum einen ist eine Schwenkeinheit 10 gezeigt, die ein Grundgehäuse 12 und ein Schwenkelement 14 umfasst. Ferner ist eine Parallelgreifeinrichtung 16 gezeigt, die ein Grundgehäuse 18 sowie zwei im Grundgehäuse aufeinander zu und voneinander weg bewegbare Backen 20 und an den Backen angeordnete Greiffinger 22 umfasst. Als dritte Automationskomponente ist in der Figur 1 eine Schwenkgreifeinheit 24 dargestellt, die ein Grundgehäuse 26 und zwei aufeinander zu beziehungsweise voneinander weg verschwenkbare Greiffinger 28 aufweist. Die in der Figur 1 gezeigten Automationskomponenten können beispielsweise mittels Handhabungssystemen im Raum bewegbar angeordnet sein. Zur Lage- oder Positionsabfrage der jeweils bewegten Bauteile 14, 22, 28 können die Maschinenkomponententeile 10, 16, 24 Abfragesysteme umfassen.

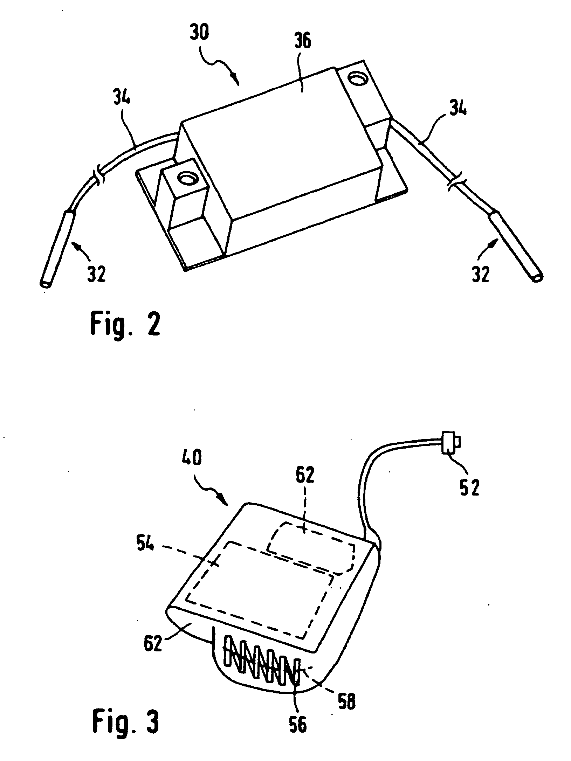

Ein derartiges Abfragesystem umfasst eine automationskomponentenseitige Abfragebaugruppe, die beispielsweise bei der Schwenkeinheit 10 am Grundgehäuse 12, beim Parallelgreifer 16 am Grundgehäuse 18 und beim Schwenkgreifer 24 am Grundgehäuse 26 angeordnet sein kann. Eine derartige Abfragebaugruppe ist in der Figur 2 dargestellt und mit dem Bezugszeichen 30 gekennzeichnet. Die Abfragebaugruppe 30 umfasst ihrerseits zwei versorgungsenergiefrei-arbeitende Schalter 32, die über elektrisch leitende Kabel 34 mit einer Funksendeeinheit 36 verbunden sind. Die Schalter 32 können dabei beispielsweise als magnetische Näherungsschalter in Form von Reedschaltern ausgebildet sein, die dann schalten, wenn ein ferromagnetisiertes Element, bzw. ein Dauermagnet in ihren Detektionsbereich gelangt. Derartige Schalter benötigen keine Eigenenergieversorgung.

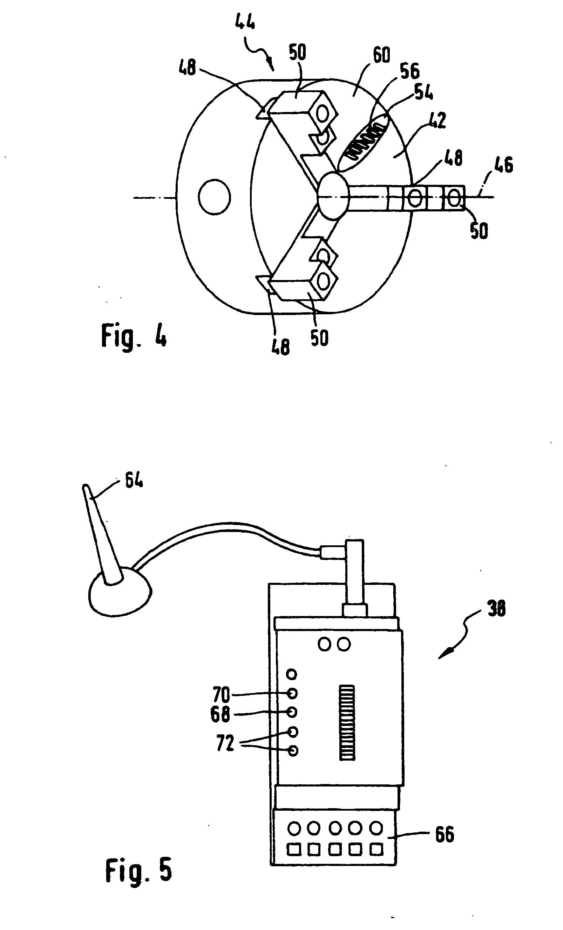

Die Funksendeeinheit 36 wertet die Schaltsignale der Schalter 32 aus und versendet digitale Funkschaltsignale, beispielsweise in Form von Funktelegrammen, an eine in der Figur 5 dargestellte Funkempfangseinheit 38. Die in der Figur 2 dargestellte Abfragebaugruppe 30 umfasst ferner eine nicht dargestellte Energiequelle in Form einer Batterie. Anstelle oder zusätzlich zu der Batterie ist es denkbar, einen Energieerzeuger, wie beispielsweise Solarzellen, vorzusehen.

Dadurch, dass die Schalter 32 keine elektrische Energie benötigen, und dass bereits ausgewertete, digitale Schaltsignale versendet werden, benötigt die Funksendeeinheit vergleichsweise wenig elektrische Energie. Wird beispielsweise pro Sekunde ein digitales Funktelegramm von der Funksendeeinheit versendet, so beträgt die Lebensdauer bei heute erhältlichen, herkömmlichen Batterien fünf bis zehn Jahre. Eine derart lange Lebensdauer der Batterie ergibt sich insbesondere dadurch, dass die Signaldauer der versendeten digitalen Funkschaltsignale kürzer als eine Millisekunde ist.

In der Figur 3 ist eine zweite Ausführungsform einer Abfragebaugruppe 40 dargestellt, die zur Anordnung in eine bewegte Maschinenkomponente in Form eines um eine Rotationsachse 46 drehbaren, in der Figur 4 dargestellten Kraftspannfutters 44 mit einem Futterkörper 42 vorgesehen ist. Im Futterkörper 42 sind in radialer Richtung Backenführungen 48 für in radialer Richtung verlagerbare Spannbacken 50 vorgesehen. Mit den Spannbacken 50 können Werkstücke zu drehenden Bearbeitung zentriert gehalten werden.

Wie in der Figur 3 dargestellt umfasst die Abfragbaugruppe 40 einen versorgungsenergiefrei-arbeitenden Schalter 52, insbesondere einen Druckschalter zur Überwachung des Spanndruckzustandes eines Spanndruckmittels, mit dem der Spanndruck der Backen 50 erzeugt wird. Ferner umfasst die Abfragebaugruppe 40 eine Funksendeeinheit 54 zur Auswertung der Schaltzustände des Druckschalters 52 und zur Versendung der ausgewerteten Schaltsignale mittels digitalen Funksignalen. Die Funksendeeinheit 54 umfasst dabei eine schraubenfederartig ausgebildete Antenne 56, die entlang einer gebogenen Linie 58 über eine senkrecht zur Rotationsachse verlaufende Oberfläche 60 des Futterkörpers 42 hervorragt. Die gebogene Linie 58, entlang derer die Antenne 56 verläuft, ist insbesondere in Figur 3 deutlich zu erkennen. Dabei schließt die der Antenne 56 zugewandte umlaufende Kante 62 bei im Futterkörper 42 eingebautem Zustand der Abfragebaugruppe 40 wenigstens weitgehend bündig mit der Oberfläche 42 ab. Eine derartige Anordnung hat den Vorteil, dass über die gegenüber der Oberfläche 42 hervorragende Antenne 56 optimal, auch bei schnell drehendem Kraftspannfutter 44, Funksignale unter vergleichsweise geringem Energieverbrauch versendet werden können.

In der Figur 4 ist die Abfragebaugruppe 40 in das Kraftspannfutter 44, beziehungsweise in dessen Futterkörper 42, eingebaut. Der Futterkörper 42 sieht hierzu eine den Außenabmessungen der Abfragebaugruppe 40 komplementäre Ausnehmung vor. Wie bereits erläutert, steht die Antenne 56 im eingebauten Zustand in axialer Richtung über die senkrecht zur Rotationsachse 46 verlaufende Oberfläche vor.

Wie aus der Figur 3 ferner zu erkennen ist, umfasst die Abfragebaugruppe 40 eine Energiequelle in Form einer Batterie 62. Die Batterie 62, die Funksendeinheit 54 und die Antenne 56 sind dabei vollständig in einen Kunstverguss eingebettet. Hierdurch wird ein optimaler Schutz erreicht. Der Druckschalter 52, der über ein Kabel mit der Funksendeeinheit 54 verbunden ist, befindet sich im eingebauten Zustand im oder am Druckraum des Spanndruckmittels.

Wie bereits erwähnt, ist in der Figur 5 eine stationär anzuordnende Funkempfangseinheit 38 dargestellt, die eine Antenne 64 umfasst, mit der die von der Funksendeeinheit 36 gemäß Figur 2 und/oder der Funksendeeinheit 40 gemäß Figur 4 digitale Funksignale empfangen werden. Die Funkempfangseinheit 38 weist dabei eine Schnittstelle 66 zur Verbindung mit einer Maschinensteuerung, insbesondere mit der die Automationskomponenten 10, 16, 14 gemäß Figur 1 und/oder das Kraftspannfutter 44 gemäß Figur 4 ansteuerende Maschinensteuerung auf. Mit der Funkempfangseinheit 38 können ferner ausgesendete digitale Funkschaltsignale abgefragt werden.

Die in den Figuren dargestellten Funksendeeinheiten können derart ausgebildet sein, dass sie den Status der Energiequellen überwachen und diesbezügliche Energiequellenkontrollsignale aussenden. Sollten die Energiequellenkontrollsignale einen bestimmten Wert unterschreiten, so kann dies von der Funkempfangseinheit 38 erkannt, angezeigt und/oder an die Maschinensteuerung weitergeleitet werden.

Ferner können die Funksendeeinheiten 30, 44 derart ausgebildet sein, dass sie Funkkontaktkontrollsignale aussenden, die von der Funkempfangseinheit 38 empfangen werden. Sollten regelmäßig ausgesendete Funkkontaktkontrollsignale nicht empfangen werden, so kann dies zu einer Störmeldung führen.

Die Funkempfangseinheit 38 sieht verschiedene Kontrollleuchten vor, nämlich eine Energiequellenkontrollleuchte 68 der Funksendeeinheit 40, eine Funkkontaktkontrollleuchte 70 sowie zwei Schaltkontaktkontrollleuchten 72, zur Kontrolle der Schaltzustände der Schalter 32, 52. Ferner ist eine Kontrollleuchte 74 für die Versorgungsspannung der Funkempfangseinheit 38 vorhanden.

## Patentansprüche

1. Um eine Rotationsachse (46) drehbar anordenbare Maschinenkomponente in Form eines Kraftspannfutters (44) mit einem Spannbacken (50) führenden Futterkörper (42), umfassend ein Abfragesystem, umfassend eine Abfragebaugruppe (30, 40) zur maschinenkomponentenseitigen Anordnung mit wenigstens einem bei einem bestimmten Zustand der Maschinenkomponente oder bei einer bestimmten Position eines Maschinenkomponententeils versorgungsenergiefrei-arbeitenden Schalter (32, 52), mit einer die Schaltzustände des Schalters (32, 52) auswertenden und die ausgewerteten Schaltsignale mit digitalen Funkschaltsignalen versendenden Funksendeeinheit (36, 54), und mit einer elektrischen Energiequelle (62) zur Versorgung der Funksendeeinheit (36, 54) und umfassend eine gegenüber der Abfragebaugruppe (30, 40) stationär anordenbare Funkempfangseinheit (38) zum Empfangen und zum Auswerten, Weiterleiten und/oder Anzeigen der von der Funksendeeinheit empfangenen Signale, wobei die Abfragebaugruppe (40) im Futterkörper (42) angeordnet ist, **dadurch gekennzeichnet, dass** die Funksendeeinheit (54) eine schraubenfederartig ausgebildete Antenne (58) umfasst, die in axialer Richtung über die senkrecht zur Rotationsachse (46) verlaufende Oberfläche (60) des Futterkörpers (42) hervorragt, und
dass die Funksendeeinheit (54) samt Antenne (56) und Energiequelle (62) vollständig innerhalb eines Kunststoffvergusses angeordnet ist.

2. Kraftspannfutter (44) nach Anspruch 1, **dadurch gekennzeichnet, dass** die Antenne (58) entlang einer gebogenen Linie (58) verläuft.

3. Kraftspannfutter (44) nach Anspruch 1 oder 2, **dadurch gekennzeichnet, dass** der Schalter (52) ein Druckschalter zur Kontrolle des Spanndruckzustands des Spanndruckmittels und/oder der Spannposition der Spannbacken (50) ist.

## Claims

1. Machine component in the form of a power chuck (44), rotatably arrangeable around an axis of rotation (46), with a chuck body (42) guiding clamping jaws (50), comprising a polling system, comprising a polling subunit (30, 40) that is to be disposed at the machine component with at least one switch (32, 52) that operates without power in a certain state of the machine component or a certain position of a part of the machine component, a radio transmitter unit (36, 54) that evaluates the switching modes of the switch (32, 52) and transmits the evaluated switching signals with digital radio switching signals, and an electric power source (62) for supplying the radio transmitter unit (36, 54) and further comprising a radio receiver unit (38) that is stationary relative to the polling subunit (30, 40) and is used for receiving and evaluating, forwarding and/or displaying the signals received from the radio transmitter unit, wherein the polling subunit (40) is disposed in the chuck body (42), **characterized in that** the radio transmitter unit (54) comprises an antenna (58) shaped like a helical spring, that protrudes in an axial direction out of the surface (60) of the chuck body (42) perpendicular to the axis of rotation (46), and **in that** the radio transmitter unit (54) together with the antenna (56) and power source (62) is completely encased within a plastic socketing.

2. Power chuck (44) according to claim 1, **characterized in that** the antenna (58) extends along a curved line (58).

3. Power chuck (44) according to claim 1 or 2, **characterized in that** the switch (52) is a pressure switch for monitoring a clamping pressure state of the clamping pressure means and/or a clamping position of the clamping jaws (50).

## Revendications

1. Composant de machine en forme de mandrin de puissance (44) positionnée autour d'une axe de rotation (46) de manière rotative avec un corps de mandrin (42) conduisant des griffes de serrage (50), comprenant un système d'interrogation avec un bloc d'interrogation (30, 40) destiné à être agencé côté composant de machine, comprenant au moins un commutateur (32, 52) libérant de l'énergie d'alimentation lorsque le composant de machine est dans une certain état ou qu'une pièce de composant de machine se trouve dans une certaine position, une unité émettrice radio (36, 54) interprétant les états de commutation du commutateur (32, 52) et envoyant les signaux de commutation interprétés avec des signaux de commutation radio numériques, une source d'énergie électrique (62) pour alimenter l'unité émettrice radio (36, 54) et une unité réceptrice radio (38) pouvant être agencée de manière fixe par rapport au bloc d'interrogation (30, 40) destinée à recevoir et à interpréter, transférer et/ou indiquer les signaux reçus depuis l'unité émettrice radio, le bloc d'interrogation (40) étant disposé dans le corps de mandrin (42), **caractérisé en ce que** l'émettrice radio (54) comprend une antenne (58) en forme de ressort à boudin, qui dépasse dans la direction axiale sur la surface (60) du corps de mandrin (42) s'étendant perpendiculaire à l'axe de la de rotation(46), et que l'émettrice radio (54) avec l'antenne (56) et la source d'énergie électrique (62) est complètement enfermé dans une encapsulation plastique.

2. Mandrin de puissance (44) selon la revendication 1, **caractérisé en ce que** l'antenne (58) s'étend le long d'une ligne courbe (58).

3. Mandrin de puissance (44) selon la revendication 1 ou 2, **caractérisé en ce que** le commutateur (52) est un interrupteur à pression pour surveiller la condition de pression de serrage du moyen de pression de serrage et/ou pour surveiller la position de serrage des griffes de serrage (50).
